# EUROPEAN PATENT APPLICATION

(11) **EP 3 782 716 A1**
(43) Date of publication of application: **24.02.2021**
(21) Application number: 19193314.2
(22) Date of filing: 23.08.2019
(51) Int. Cl.: B01D 61/22

(54) **CROSSFLOW FILTRATION METHOD, METHOD FOR OBTAINING AT LEAST ONE CROSSFLOW FILTRATION PARAMETER AND SYSTEM FOR OBTAINING AT LEAST ONE CROSSFLOW FILTRATION PARAMETER**

(71) Applicant: Sartorius Stedim Biotech GmbH, 37079 Göttingen (DE)
(72) Inventor: LEUTHOLD, Martin, 37079 Göttingen (DE)
(74) Representative: Müller-Boré & Partner Patentanwälte PartG mbB

(57) **Abstract**

The present invention relates to a crossflow filtration method, a method for obtaining at least one crossflow filtration parameter and a system for obtaining at least one crossflow filtration parameter.

## Description

The present invention relates to a crossflow filtration method, a method for obtaining at least one crossflow filtration parameter and a system for obtaining at least one cross-flow filtration parameter.

In early stages of the development of a crossflow filtration method, the behaviour of a feed solution in a specific crossflow filtration method and crossflow filtration device is usually unknown. For instance, the behaviour of a biological compound as the target substance contained in an aqueous buffer as the feed solution may be unknown. Furthermore, the properties of the feed solution and the target substance may vary during a crossflow filtration process, e.g. due to a varying composition of the feed solution (for instance by a buffer exchange or a concentration change). In addition, physical properties of smaller devices cannot be directly transferred to larger devices of industrial scape and vice versa. Further factors that may have an impact on a crossflow filtration method and its development include the amount of shearing forces acting on the feed solution / the target substance, the number of passages through the fluid path of the crossflow filtration device, the nature and type of components of the crossflow filtration device such as pumps, the temperature and the process time. However, the influence of these factors is in general not known when developing a crossflow filtration method.

The above generally applies both to feed solutions including small molecules (Mₙ ≤ 8000 g/mol) as well as to large molecules/target substances originating from biological processes. However, these effects are usually more pronounced for large molecule target substances and biological target substances.

When the behaviour of a feed solution is unknown, undesired effects such as damage of the target substance, blocked filter materials, low efficiency of the crossflow filtration process and the like, may occur. To name an example, a protein as the target substance may agglomerate and/or form di- or trimers and/or be fragmented under certain conditions, which is in general undesired. Moreover, agglomerates and/or fragments may block the filter material of the crossflow filtration device so that target substance is lost (due to the formation of the agglomerates and/or the fragments) and the cross-flow filtration process becomes inefficient. Thus, for example when choosing a cross-flow filtration device having a design (e.g. filtration channel geometry) that is not suited for a specific target substance, problems such as the ones mentioned above may occur. It is therefore necessary to obtain suitable crossflow filtration parameters (such as the design of the crossflow filtration device as well as process parameters such as flow velocity, transmembrane pressure and the like).

According to the prior art, appropriate crossflow filtration parameters are selected based on empirical experiments, i.e. based on trial and error. However, particularly in early stages of process development, usually only low amounts of feed solution including the target substance are available. Thus, it is difficult to find optimum crossflow filtration parameters by means of the above empirical procedure, which requires substantial amounts of feed solution and target substance. Under these circumstances, it may even occur that well-performing target substances (e.g. drug candidates) cannot be marketed because it is difficult to find optimum crossflow filtration parameters.

Accordingly, the technical problem underlying the present invention is to provide a method for obtaining at least one crossflow filtration parameter that should be efficient and require only small amounts of a feed solution including a target substance, a cross-flow filtration method that is based on the at least one crossflow filtration parameter obtained by the latter method as well as a system for carrying out the method for obtaining at least one crossflow filtration parameter.

The solution to the above technical problem is achieved by providing the subject matter characterized in the claims.

In a first aspect, the present invention relates to a method for obtaining at least one crossflow filtration parameter, comprising the steps of (ia) selecting at least one feed solution including a target substance; (ib) selecting at least one crossflow filtration method and at least one crossflow filtration device such that at least two methods or devices are selected and the at least two methods or devices differ from one another with respect to the at least one crossflow filtration parameter; (ii) obtaining at least one correlation between parameters of the at least one feed solution, the at least one cross-flow filtration method and/or the at least one crossflow filtration device; (iii) modelling the at least one crossflow filtration method (selected in step (ib)) for the at least one feed solution (selected in step (ia)) employing the at least one crossflow filtration device (selected in step (ib)) based on the at least one parameter correlation (obtained in step (ii)); and (iv) selecting the at least one crossflow filtration parameter based on the result of step (iii).

By virtue of the above method, it is possible to obtain one or more appropriate cross-flow filtration parameters for a target substance in an efficient way without the need of a large amount of feed solution/target substance.

The target substance selected in step (ia) is not particularly limited according to the present invention. The target substance can be a small molecule (Mₙ ≤ 8000 g/mol) or a large molecule (Mₙ > 8000 g/mol). The number average molecular weight Mₙ can be determined by gel permeation chromatography (GPC) based on polystyrene standards. Since the above-mentioned problems in crossflow filtration occur primarily when the target substance is a large molecule, it is preferred that the target substance is a large molecule.

According to a preferred embodiment of the present invention, in step (ia), the target substance is selected from a protein, a nucleic acid, a cell, a cell fragment, or any combination thereof. Preferred examples for proteins are antibodies. Preferred examples for nucleic acids are DNA and RNA. Furthermore, the target substance may be a pharmaceutically active substance such as a vaccine.

According to the present invention, the at least one feed solution selected in step (ia) is not particularly limited. The at least one feed solution includes the target substance and a solvent. (In each of the one or more feed solutions, the same target substance is contained, i.e. the method according to the present invention provides at least one crossflow filtration parameter for a specific target substance.) In addition, the at least one feed solution may include one or more impurities to be removed by crossflow filtration. The solvent is not particularly limited and may be an organic solvent or a mixture of organic solvents. In addition to one or more organic solvents, the at least one feed solution can include water. According to a preferred embodiment of the present invention, the at least one feed solution includes an aqueous solvent. Preferably, the at least one feed solution is an aqueous solution of the target substance and one or more impurities, wherein the feed solution optionally contains a buffer. Suitable buffers are, for instance, TRIS HCl buffer (i.e. tris(hydroxymethyl) aminomethane hydrochloride buffer), potassium phosphate (KPi) buffer and the like.

In step (ia), only one feed solution can be selected or several feed solutions different from one another can be selected. It is preferred that the at least one feed solution of step (ia) is a plurality of feed solutions, preferably a plurality of at least 2, more preferably at least 4, particularly preferably at least 8, even more preferably at least 16 feed solutions. The composition of the at least one feed solution selected in step (ia) is a composition immediately before / at the beginning of the crossflow filtration method modelled in step (iii). That is, the composition of the at least one feed solution selected in step (ia) is the initial composition of the at least one feed solution. In this context, feed solutions having different compositions but containing the same target substance may be obtained in the manufacture of the target substance. For example, a feed solution may directly originate from a fermentation step or may, subsequent to fermentation, be subjected to a processing step (e.g. an adjustment of the target substance concentration, buffer concentration, and/or pH). Feed solutions of different compositions may perform differently in a crossflow filtration method. Using the method of the present invention, appropriate crossflow filtration parameter(s) can be obtained for feed solutions having different compositions. In case different feed solutions are selected in step (ia), step (iii) is carried out for each of the feed solutions.

In step (ib), at least two crossflow filtration parameters different from one another are selected. Specifically, the crossflow filtration parameters are selected among crossflow filtration method parameters and crossflow filtration device parameters. In particular, in step (ib) of the inventive method, at least one crossflow filtration method and at least one crossflow filtration device are selected such that at least two methods or devices are selected and the at least two methods of devices differ from one another with respect to the at least one crossflow filtration parameter that is to be obtained by the method according to the present invention.

Crossflow filtration method parameters include the transmembrane pressure, the flow rate of the feed solution, the flow rate of the retentate, the flow rate of the permeate, the total volume of the feed solution, as well as parameters regarding the composition of the feed solution, the retentate and the permeate such as the concentration of the target substance, buffer concentration, turbidity, conductivity, pH and the like. In more general terms, the crossflow filtration method and crossflow filtration device parameters selected in step (ib) may in principle be any crossflow filtration parameter that can be monitored and/or controlled.

The at least one crossflow filtration device selected in step (ib) is not particularly limited and may have any design and any shape. In general, a crossflow filtration device has a feed solution inlet through which the feed solution enters the feed solution channel (retentate channel) of the crossflow filtration device. In addition, a crossflow filtration device generally has a permeate channel and a permeate outlet. The feed solution channel and the permeate channel are generally separated from one another by a filter material. The filter material is not particularly limited and may be any filter material suitable for crossflow filtration. Preferably, the filter material is a filtration membrane. The feed solution passes from the feed solution channel through the filter material and enters the permeate channel, leaving the crossflow filtration device via the permeate outlet. Preferably, the crossflow filtration device further has a retentate outlet.

As one or more of the at least one crossflow filtration device selected in step (ib), a crossflow diafiltration device may be mentioned. Such a device has the same construction as a crossflow filtration device, with the provision that a crossflow diafiltration device includes a diafiltration channel that is separated from the feed solution channel by a further filter material. Moreover, the at least one crossflow diafiltration device has an inlet for a diafiltration medium that is fluidically connected to the diafiltration channel. Crossflow diafiltration devices that can be selected in step (ib) of the inventive method are described in detail in WO 2017/174192 A1 ("Cross-flow filtration unit for continuous diafiltration").

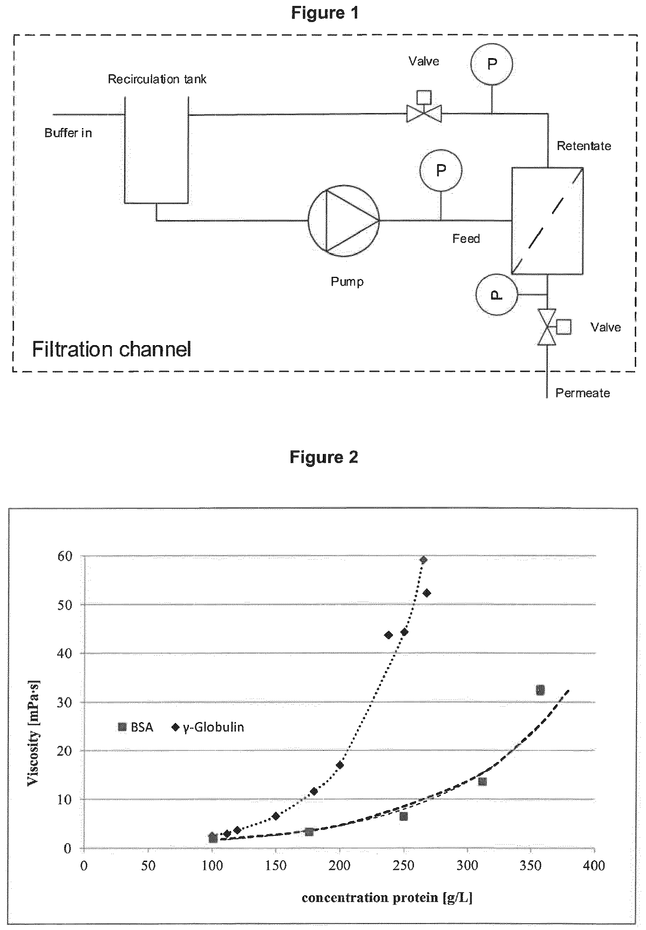

An exemplary crossflow filtration device is shown schematically in Figure 1. A preferred crossflow filtration device such as the one displayed in Figure 1 has a retentate outlet. (Feed solution that enters the feed solution channel but does not pass the filter material is referred to as "retentate".) The retentate is fed to a recirculation tank from which the retentate is again supplied to the feed solution inlet.

According to a preferred embodiment of the present invention, the at least one cross-flow filtration device selected in step (ib) is an industrial scale crossflow filtration device. Herein, a crossflow filtration device is considered to be of industrial scale if its filtration area is at least 100 cm², preferably at least 150 cm², more preferably at least 200 cm². The filtration area is the area of the filter material that is accessible to the feed solution. When selecting at least one industrial scale crossflow filtration device in step (ib) as the at least one crossflow filtration device, it is possible to develop a crossflow filtration method of industrial scale by the method for obtaining at least one crossflow filtration parameter according to the present invention. That is, a scale-up of a crossflow filtration method from a laboratory frame to an industrial scale is possible without having to rely on trial-and-error-based empirical investigations. Thereby, an industrial scale method can be set up in an efficient manner without requiring a large amount of feed solution including the target substance.

According to a preferred embodiment of the present invention, at least two different crossflow filtration device parameters are selected in step (ib); and the at least one crossflow filtration parameter selected in step (iv) also is a crossflow filtration device parameter. That is, according to a preferred embodiment of the present invention, at least two crossflow filtration devices are selected in step (ib) and the at least two cross-flow filtration devices differ from one another with respect to their design; and the at least one crossflow filtration parameter selected in step (iv) includes a parameter relating to the design of a crossflow filtration device. In particular, the at least two cross-flow filtration devices having a different design preferably selected in step (ib) can have a spiral wound design, a plate-and-frame design for flat filter materials (such as sheet membranes) and a design suitable for hollow fiber membranes (hollow fiber module), respectively.

In this context, it should be noted that the crossflow filtration parameters selected in step (iv) can be the same as or different from the at least two crossflow filtration parameters different from one another selected in step (ib). That is, the at least one cross-flow filtration parameter can be selected in step (iv) among the at least two different crossflow filtration parameters of step (ib). In this case, at least one of the at least two different parameters from step (ib) is selected. Alternatively, the at least one crossflow filtration parameter selected in step (iv) may be different from the at least two different crossflow filtration parameters of step (ib). For instance, when selecting two different feed channel geometries in step (ib), e.g. two different feed channel widths, a feed channel width selected in step (iv) may be a feed channel width that lies between the width values of step (ib).

According to a particularly preferred embodiment of the present invention, the at least two different crossflow filtration devices selected in step (ib) have different feed solution channel geometries; and the at least one crossflow filtration parameter selected in step (iv) includes a parameter relating to the feed solution channel geometry of a crossflow filtration device. For instance, different widths of the feed solution channel may be selected. Moreover, in one of the selected crossflow filtration devices, a spacer or flow fitting may be included in the feed solution channel so that a particular feed solution channel geometry is obtained. Different types of feed solution channel geometries are well known to the skilled person (for instance see Journal of Membrane Science 540 (2017) 440-453 and WO 2019/057652 A1).

According to a further preferred embodiment of the present invention, the at least two different crossflow filtration devices selected in step (ib) differ from one another with regard to the filter material of the crossflow filtration device. For instance, filter materials of different porosities and/or filter materials having different compositions (e.g. a membrane made of polyethersulfone, a membrane made of celluloseacetate) may be selected.

Furthermore, it is preferred that the at least two crossflow filtration devices are selected from a specific group of crossflow filtration devices. For instance, it may be desired to carry out a chromatography step subsequent to a crossflow filtration method. In such a case, the at least two crossflow filtration devices are preferably chosen from cross-flow filtration devices having different ratios of the filtration area to the volume of the feed solution channel. Specifically, the at least two crossflow filtration devices might include or be one or more Sartocon® E-Screen devices and one or more Sartocon® ECO devices (both manufactured by Sartorius Stedim Biotech GmbH). Sartocon® E-Screen devices and Sartocon® ECO devices are available as variants of Sartocon® Slice 50 devices, manufactured by Sartorius Stedim Biotech GmbH.

According to a further preferred embodiment of the present invention, the at least one crossflow filtration device selected in step (ib) includes a crossflow filtration device that is constituted by a serial combination of at least two crossflow filtration devices. That is, the at least one crossflow filtration device of step (ib) may include or be a serial crossflow filtration device, wherein two or more crossflow filtration devices are combined in series. The crossflow filtration devices constituting the serial crossflow filtration device may be of the same type or different from one another.

According to a preferred embodiment of the present invention, a plurality of crossflow filtration methods and a plurality of crossflow filtration devices is selected in step (ib). Preferably, the number of crossflow filtration methods is at least 2, more preferably at least 5, particularly preferably at least 10, even more preferably at least 50, most preferably at least 100. Moreover, it is preferred that the number of crossflow filtration devices is at least 2, more preferably at least 5, particularly preferably at least 10, even more preferably at least 50, most preferably at least 100. In this context, a first cross-flow filtration method/device is considered to be different from a second crossflow filtration method/device if the first method/device differs from the second method/device with regard to at least one crossflow filtration method/device parameter, such as the ones mentioned above. In view of the practicability of the method, the number of cross-flow filtration methods and devices selected in step (ib) is at most 10⁶, preferably at most 1000.

Moreover, it is preferred that the at least one crossflow filtration method of step (ib) is selected from a specific group of crossflow filtration methods. For example, the at least one crossflow filtration method is preferably selected from crossflow filtration methods having a maximum process time. (The process time is the necessary time for subjecting a certain volume of feed solution to crossflow filtration.) By virtue of such a selection, it is possible to establish a proper crossflow filtration method that does not exceed a certain maximum process time.

In step (ii) of the method for obtaining at least one crossflow filtration parameter according to the present invention, at least one correlation between parameters of the at least one feed solution, the at least one crossflow filtration method and/or the at least one crossflow filtration device is obtained. The nature of the at least one correlation is not particularly limited as long as it relates to parameters of the feed solution(s), parameters of the crossflow filtration method(s) and/or parameters of the crossflow filtration device(s). Based on the at least one correlation, an accurate model of the at least one crossflow filtration method for the at least one feed solution employing the at least one crossflow filtration device can be set up in step (iii) of the method according to the present invention.

According to a preferred embodiment of the present invention, the at least one correlation between parameters obtained in step (ii) is a correlation between the concentration of the target substance in the at least one feed solution and the viscosity of the at least one feed solution; between the temperature of the at least one feed solution and the viscosity of the at least one feed solution; between the pressure drop in a filtration channel of the at least one crossflow filtration device and the crossflow rate of the at least one crossflow filtration method; between the pressure drop in a filtration channel of the at least one crossflow filtration device and the viscosity of the at least one feed solution; between the transmembrane pressure in the at least one crossflow filtration method and the crossflow rate in the at least one crossflow filtration method; between the composition of the retentate and the viscosity of the retentate; between the composition of the retentate and the stability of the target substance in the retentate; or any combination thereof. Preferably, the at least one correlation includes or is a correlation between the pressure drop in a filtration channel of the at least one crossflow filtration device and the viscosity of the at least one feed solution.

According to the present invention, the way in which the at least one parameter correlation is obtained is not particularly limited. For instance, one or more of the at least one correlation obtained in step (ii) can be determined experimentally. In addition or as an alternative, one or more of the at least one correlation obtained in step (ii) can be retrieved from historical data. For example, such historical data can be retrieved from the manufacturer of the at least one crossflow filtration device, publications such as scientific journals, and/or a database. The historical data may include results from experimental data carried out at an earlier point in time. More specifically, the method of the present invention including step (ii) may be carried out such that at least one correlation is obtained experimentally, the said at least one correlation from the aforementioned step (ii) may be recorded/stored so as to constitute historical data that may later on be used for carrying out the inventive method (including step (ii)) in another instance.

Preferably, the historical data is retrieved from a database. It is further preferred that the database has an electronic form and is stored on a computer. It is particularly preferred that the database is stored on the same computer on which step (iii) may preferably be carried out, as described below in the context of the system of the present invention.

According to a preferred embodiment of the present invention, step (ii) involves at least one experiment. That is, it is preferred that one or more of the at least one correlation obtained in step (ii) is determined experimentally.

The parameter of the correlation to be determined can be measured e.g. by UV spectroscopy, Vis spectroscopy, UV-Vis spectroscopy, fluorescence spectroscopy, light scattering spectroscopy, IR spectroscopy, Raman spectroscopy, magnetic resonance spectroscopy, or any combination thereof.

It is particularly preferred that the at least one experiment involves the use of a cross-flow filtration module. The parameter of the correlation to be determined can be measured by sampling a probe from the crossflow filtration module and carrying out one of the above methods of measurement on the probe. The crossflow filtration module is preferably a small scale crossflow filtration module.

It is even more preferred that the experiment is carried out by using a crossflow filtration module equipped with at least one sensor so that the parameter can be measured *in situ* (within the crossflow filtration module). Further preferred aspects of this embodiment are explained below in the context of the system of the present invention, the aspects of which also apply to the inventive methods.

According to a particularly preferred embodiment of the present invention, the at least one experiment is carried out by high-throughput screening (HTS). For HTS, an automated modular filtration system may be used. For instance, the at least one experiment or HTS can be carried out by using a system as described in WO 2018/138160 A1. It is particularly preferred that the at least one experiment is carried out using an ambr® crossflow device (automated modular filtration system) which can be obtained from Sartorius Stedim Biotech GmbH.

According to a further preferred embodiment of the present invention, a plurality of correlations is obtained in step (ii), wherein one or more of the correlations is determined experimentally and the remainder of the correlations (i.e. those correlations that are not determined experimentally) is retrieved from historical data.

For example, Figure 2 shows the results of an experimental determination of a correlation between parameters of the feed solution. In particular, feed solutions of bovine serum albumin (BSA) and γ-globulin of different concentrations were prepared and the respective viscosities were measured at 25°C (room temperature) using a rotational viscometer measuring system "HAAKE RheoWin MARS 60" manufactured by Thermo Fischer Scientific. It can be taken from Figure 2 that the viscosities of the feed solutions containing BSA as a target substance were lower than the viscosities of the feed solutions containing γ-globulin. Based on a parameter correlation as shown in Figure 2, the change of the viscosity of the feed solution due to a change of the concentration of the target substance can be taken into account when modelling the at least one crossflow filtration method in step (iii). The same holds true for other parameter correlations.

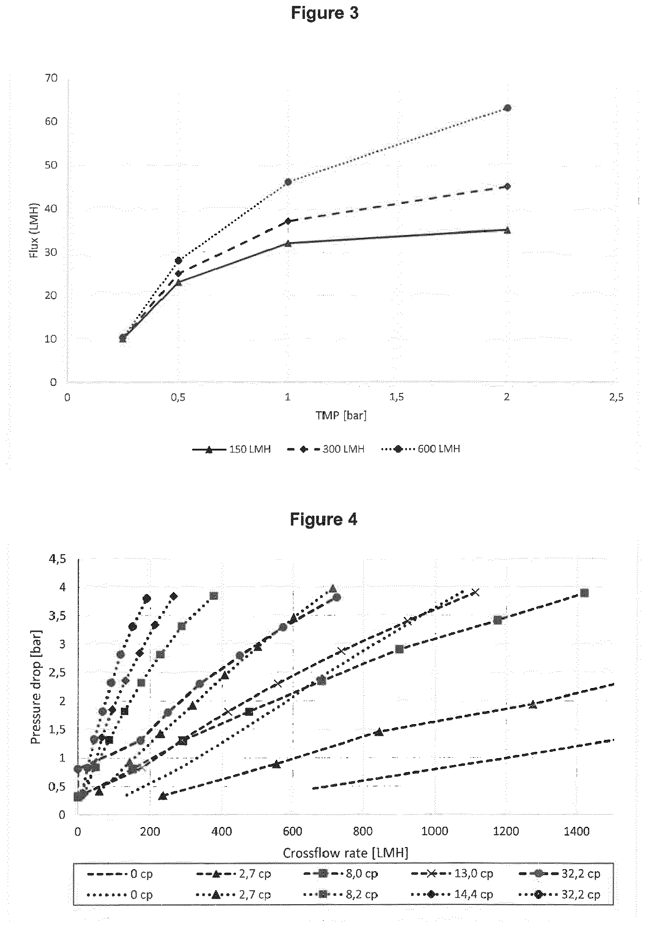

Another example for parameter correlations that may be obtained in step (ii) is shown in Figure 3, namely a correlation between parameters of the crossflow filtration method. In particular, for a particular feed solution containing BSA, the correlation between the transmembrane pressure (TMP), in the unit bar, and the permeate flow (flux), in the unit L·m⁻²·h⁻¹ (or "LMH"), is given for different crossflow rates (flux of feed solution / retentate through the feed solution channel), in the unit L·m⁻²·h⁻¹.

The TMP can be calculated by the formula "TMP = ((feed inlet pressure - retentate pressure) / 2) - permeate pressure", wherein the feed inlet pressure, the retentate pressure and the permeate pressure can be measured by corresponding sensors, for instance using an ambr® crossflow device.

Preferably, the TMP should not increase a value of 3 bar. As can be seen from Figure 3, the higher the TMP, the higher the permeate flow. For low TMPs, the permeate flow increases approximately linearly with an increasing TMP. However, for higher TMPs, a large increase of the TMP results only in a small increase of the permeate flow. Without being bound to a particular theory, it is assumed that the permeate flow is inhibited or blocked by a layer of the target substance and/or impurities covering the filtration channel side surface of the filter material for higher TMPs. The cover layer effect is less pronounced for higher crossflow rates. Without being bound to a particular theory, it is assumed that the cover layer can be destroyed to a certain extent by increasing the flow rate in the feed solution channel (crossflow rate). When taking account of the above correlation between the TMP and the permeate flow, a high accuracy of the modelling in step (iii) can be attained.

Figure 4 shows a further example for correlations between parameters of the at least one crossflow filtration method (here: crossflow rate) and the at least one crossflow filtration device (here: pressure drop). Specifically, the industrial scale devices A and B (filtration area = 7000 cm²) were similar except for a different feed solution channel geometry. The device A had a wider feed solution channel than the device B. Correlations for device A are drawn as dashed (---) lines, correlations for device B are drawn as dotted (···) lines in Figure 4. For devices A and B, the correlation between the cross-flow rate of the method and the pressure drop in the feed solution channel (unit: bar) are shown for feed solutions of different viscosities (in the unit cp). As the width of the feed solution channel of device A is higher, the accessible cross-sectional area of the feed solution channel is higher. Thus, the lower pressure drops are obtained. Therefore, feed solutions with high viscosities can be handled with device A. However, even though high viscosity feed solutions are difficult to handle with the device B, it has the advantage of a narrower feed solution channel and thus a higher ratio of filter material area / volume of feed solution channel, which is advantageous in view of the efficiency of the crossflow filtration process. For instance, the device A can achieve a high cross-flow velocity even when using rather small pumps.

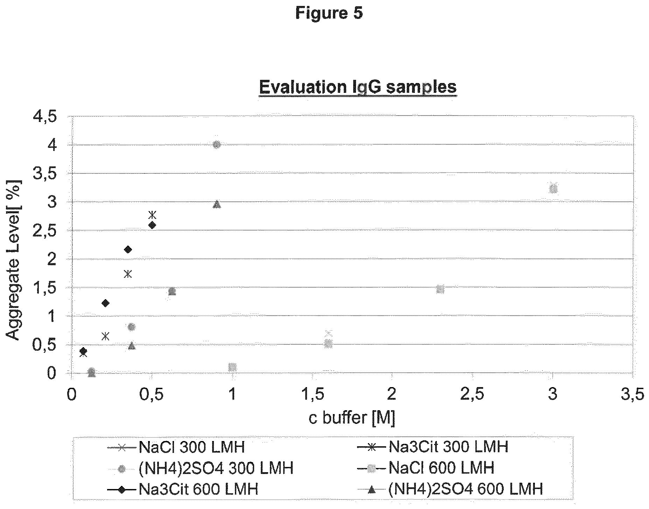

Another example for parameter correlations that may be obtained in step (ii) is shown in Figure 5, namely a correlation between the composition of the retentate (here: type and concentration of buffer) and the stability of the target substance in the retentate as well as a correlation between the crossflow rate and the stability of the target substance in the retentate. Specifically, a solution of 5 mass% immunoglobulin (IgG) in aqueous buffer A (20 mM TRIS HCl buffer (pH 7.4), 10% glycerol) was subjected to diafiltration using the device of Figure 1. A predetermined volume of the feed solution was placed into the recirculation tank. The diafiltration was started by introducing the feed solution into the retentate channel and continuously adding one of diafiltration buffers B to D into the recirculation tank. The permeate was discharged and the retentate was recirculated to the recirculation tank. Buffers B to D were aqueous solutions of 10 mM potassium phosphate and 4 M sodium chloride (buffer B, "NaCl"); 10 mM potassium phosphate and 1.5 M sodium citrate (buffer C, "Na3Cit"); and 10 mM potassium phosphate and 2.5 M ammonium sulfate (buffer D, "(NH4)2SO4"). Two different crossflow rates were used for each buffer B to D, namely 300 L·m⁻²·h⁻¹ and 600 L·m⁻²·h⁻¹, so that a total of six experiments was carried out.

During the diafiltration, the concentration of buffer B to D in the retentate increased (see abscissa of Figure 5), resulting in different aggregate levels (see ordinate of Figure 5), depending on the type of buffer (B, C or D), its concentration, and the crossflow rate. Here, the "aggregate level" in % is the proportion of the target substance IgG that is present in the form of multimers (di-, trimers etc.) based on the total amount of IgG (monomers and multimers). The aggregate level can be determined by HPLC. The higher the aggregate level, the lower the stability of the target substance.

A buffer exchange by means of diafiltration as in the experiment underlying Figure 5 may be required for a long-term stabilization of the target substance (high shelf life). However, for instance when the target substance is a protein that is to be administered to a patient, aggregates may be formed due to the buffer exchange, depending on the type and concentration of the buffer. The aggregates have to be removed in order to avoid undesired side effects for the patient. Therefore, in this case, it is preferred that the aggregate level is at most 1 %.

Aggregates can be removed by hydrophobic interaction chromatography. The efficiency of hydrophobic interaction chromatography can be influenced by the composition of the feed solution, e.g. the nature and the concentration of the buffer(s). Effects of this kind can be taken account of in step (iv). That is, step (iv) can be carried out such that it is taken into account whether the composition of the retentate and/or permeate resulting from the crossflow filtration is more or less suited for a subsequent method step such as hydrophobic interaction chromatography.

Moreover, in the experiments underlying the results displayed in Figure 5, a further parameter correlation was determined, namely a correlation between the composition of the retentate and the viscosity of the retentate. In particular, the retentates of Figure 5 which had the highest buffer concentrations were examined for their respective viscosity. The results were 2.5 mPa·s (buffer A), 2.1 mPa·s (buffer B), and 2.2 mPa·s (buffer C).

In step (iii) of the method for obtaining at least one crossflow filtration parameter according to the present invention, the at least one crossflow filtration method selected in step (ib) is modelled for the at least one feed solution selected in step (ia) employing the at least one crossflow filtration device selected in step (ib) based on the at least one parameter correlation obtained in step (ii). Based on general knowledge, a person skilled in the art is able to carry out the modelling. For instance, the modelling step (iii) can be carried out in accordance with the method described in Journal of Membrane Science 540 (2017) 440-453. Step (iii) is preferably carried out by a mathematical model that is based on a combination of statistical and physico-chemical modelling. The training and validation of such a model can be carried out by the use of a statistical method. For example, various feed solutions from biological fermentation with variable proportions of target substance and other components can be selected in step (ia) and modelled in step (iii).

According to a preferred embodiment of the present invention, step (iii) is carried out by employing a machine learning method and/or a deep learning method such as multiple linear regression, principle component regression, partial least squares regression, principal component analysis, neural networks, support vector machines, multivariate data analysis, or any combination thereof. It is particularly preferred that step (iii) is carried out by employing principle component regression, neural networks, or a combination thereof.

According to a preferred embodiment of the present invention, step (iii) is carried out by using a computer. Preferably, historical data concerning some or all of the parameter(s) of step (ii) is stored on the computer.

Furthermore, it is possible to take certain boundary conditions into account when carrying out step (iii). For instance, step (iii) may be carried out taking into account that the performance of a crossflow filtration device (in particular the filter material thereof) deteriorates after prolonged and/or repeated use. Moreover, as already noted above, step (iii) can be carried out for several feed solutions having different compositions, e.g. a feed solution originating directly from a fermentation step and a feed solution which has been processed after the fermentation step.

Referring once again to the exemplary parameter correlations as displayed in Figures 2 to 4, step (iii) can be carried out in a fast and efficient manner for a plurality of different crossflow filtration parameters, i.e. for different concentrations of the target substance in the feed solution, different crossflow rates, different TMPs and so on. By virtue of step (iii), it is possible to simulate (i.e. to determine the expected outcomes of) the at least one crossflow filtration method using the at least one crossflow filtration method under the conditions selected in steps (ia), (ib) and (ii), even if only a small amount of the target substance is available and even if a large number of feed solutions selected in step (ia), a large number of different methods and/or devices selected in step (ib), and/or a large number of correlations obtained in step (ii) is taken into account in the model/simulation.

In step (iv) of the method according to the present invention, the at least one crossflow filtration parameter is selected based on the result of step (iii). The above-mentioned expected outcomes / simulation results can be compared with one another and, based on said comparison, an appropriate set of crossflow filtration method and device parameters can be selected in step (iv) so as to establish a proper crossflow filtration method for a specific target compound. For example, it is possible to evaluate the result of step (iii) under specific conditions and select the at least one crossflow filtration parameter in step (iv) that meets the conditions. Such conditions can be boundary conditions such as a maximum total process time, a maximum loss of target substance and the like.

In a further aspect, the present invention relates to a crossflow filtration method comprising the method of obtaining at least one crossflow filtration parameter according to the present invention; and (v) a step of carrying out the crossflow filtration employing the at least one parameter selected in step (iv). Once the crossflow filtration method has been established, it can be implemented based on the selection made in step (iv). Even if there is a small deviation from the at least one parameter selected in step (iv), e.g. within ±10%, preferably within ±5%, more preferably within ±1%, most preferably within ±0.1%, the method implemented in step (v) is still considered to meet the parameter selected in step (iv).

Of course, the above explanations with regard to the method for obtaining at least one crossflow filtration parameter also apply to the crossflow filtration method according to the present invention. The above explanations also apply to the system according to the present invention and vice versa.

In a further aspect, the present invention relates to a system for obtaining at least one crossflow filtration parameter according to the above method, the system comprising (A) a crossflow filtration section configured for carrying out step (ii) involving at least one experiment; (C) a modelling section configured for carrying out step (iii); and (D) a selection section configured for carrying out step (iv).

The crossflow filtration section (A) is not particularly limited. Section (A) preferably includes at least one crossflow filtration module, particularly a plurality of crossflow filtration modules. Each of the at least one crossflow filtration modules is capable of independently carrying out a crossflow filtration process. Thus, when section (A) includes a plurality of crossflow filtration modules, preferably at least 2, more preferably at least 4, particularly preferably at least 8, most preferably at least 16 crossflow filtration modules, the system of the present invention can carry out step (ii) such that it involves a plurality of experiments by HTS. Specifically, section (A) may include an automated modular filtration system as described in WO 2018/138160 A1.

According to a preferred embodiment of the inventive system, the filtration area of the at least one crossflow filtration module is less than 100 cm², preferably at most 50 cm², particularly preferably at most 20 cm². By using crossflow filtration modules in section (A) that have such a small filtration area, only a small amount of feed solution including the target compound is necessary for carrying out step (ii).

In this context, it is preferred that the at least one crossflow filtration module includes at least one sensor. For instance, the at least one sensor may be adapted to measure the temperature, pH, viscosity, turbidity (for instance as a measure of coagulated target substance), conductivity of the feed solution and/or the retentate and/or the permeate. The at least one sensor can be installed at the feed solution inlet, the retentate outlet, the permeate outlet, within the feed solution channel and/or within the permeate channel of the crossflow filtration module. The sensor can be a UV spectroscopy sensor, a Vis spectroscopy sensor, a UV-Vis spectroscopy sensor, a fluorescence spectroscopy sensor, a light scattering spectroscopy sensor, an IR spectroscopy sensor, a Raman spectroscopy sensor, a magnetic resonance spectroscopy sensor, or any combination thereof. By means of the at least one sensor, information regarding the feed solution / retentate / permeate can be obtained for (partly) carrying out step (ii) by means of an experiment.

According to a preferred embodiment, the system according to the present invention further comprises a database (B) for carrying out step (ii). The database includes information regarding the correlations between parameters of said step (ii). Thus, by employing the database, it is possible to (partly) carry out step (ii) without an experiment. According to a preferred embodiment, the database is stored on a computer.

The modelling section (C) is not particularly limited, as long as it is capable of carrying out step (iii). According to a preferred embodiment of the present invention, the modelling section (C) includes a computer, a program is stored on the computer and the program is configured to carry out step (iii). According to a preferred embodiment of the present invention, not only the program but also the database (B) is stored on the computer.

According to the present invention, the selection section (D) is not particularly limited. For instance, the selection section (D) may include a means for creating a graphical output, such as a printer and/or a view screen, configured for displaying the results obtained from the modelling section (C); and an input means so that a human operator can carry out step (iv) based on the results displayed by the means for creating a graphical output.

According to a preferred embodiment of the present invention, the selection section includes a graphical user interface (GUI) for displaying the results obtained from the modelling section (C) and so that step (iv) can be carried out by the user based on the results displayed by the GUI.

According to a preferred embodiment of the present invention, the selection section (D) is an automatized selection section. Preferably, the automatized selection section includes a computer, a program is stored on the computer and the program is configured to carry out step (iv). The program may be designed such that the results obtained from the modelling section are evaluated according to certain criteria and such that the at least one crossflow filtration parameter is selected in accordance with the result of the evaluation. Preferably, the automatized selection section further includes a means for creating a graphical output, such as a printer and/or a view screen, configured for displaying the results obtained from the program of the automatized selection section (D).

According to a further preferred embodiment of the present invention, the system includes a definition section for carrying out steps (ia) and/or (ib). Although such a definition section is in principle not necessary as the conditions of steps (ia) and/or (ib) can be pre-selected, the user may wish to define certain boundary conditions beforehand, such as a maximum process time or the type and/or size of the at least one crossflow filtration device to be selected in step (ib). As a result of the definition of such boundary conditions, the automatized selection section may provide the user with certain requirements for the crossflow filtration that are necessary for achieving the boundary conditions, such as a minimum size of the crossflow filtration device or an specific crossflow filtration device design.
Figure 1 displays a crossflow filtration process.
Figure 2 displays a correlation between the concentration of bovine serum albumin (BSA) and γ-globulin in a respective feed solution and the viscosity of the feed solution at 25°C (room temperature).
Figure 3 displays the permeate flow (flux) for three different crossflow rates and the transmembrane pressure for a feed solution containing BSA.
Figure 4 displays the pressure drop of different feed solution channel designs (design A: ---; design B: ···) in two different industrial scale crossflow filtration devices A and B at different viscosities of the feed solution.
Figure 5 displays correlations between the composition of the retentate (here: type and concentration of buffer) and the stability of the target substance in the retentate as well as correlations between the crossflow rate and the stability of the target substance in the retentate.

## Claims

1. A method for obtaining at least one crossflow filtration parameter, comprising the steps of
(ia) selecting at least one feed solution including a target substance;
(ib) selecting at least one crossflow filtration method and at least one crossflow filtration device such that at least two methods or devices are selected and the at least two methods or devices differ from one another with respect to the at least one crossflow filtration parameter;
(ii) obtaining at least one correlation between parameters of the at least one feed solution, the at least one crossflow filtration method and/or the at least one crossflow filtration device;
(iii) modelling the at least one crossflow filtration method for the at least one feed solution employing the at least one crossflow filtration device based on the at least one parameter correlation; and
(iv) selecting the at least one crossflow filtration parameter based on the result of step (iii).

2. The method according to claim 1,
wherein step (ii) involves at least one experiment.

3. The method according to claim 1 or 2,
wherein the at least one feed solution includes an aqueous solvent.

4. The method according to any one of claims 1 to 3,
wherein the at least one crossflow filtration device selected in step (ib) is an industrial scale crossflow filtration device.

5. The method according to any one of claims 1 to 4,
wherein at least two crossflow filtration devices are selected in step (ib) and the at least two crossflow filtration devices differ from one another with respect to their design; and
the at least one crossflow filtration parameter selected in step (iv) includes a parameter relating to the design of a crossflow filtration device.

6. The method according to claim 5,
wherein the at least two different crossflow filtration devices selected in step (ib) have different feed solution channel geometries; and
the at least one crossflow filtration parameter selected in step (iv) includes a parameter relating to the feed solution channel geometry of a crossflow filtration device.

7. The method according to any one of claims 1 to 6,
wherein the target substance selected in step (ia) is selected from proteins, nucleic acids, cells, cell fragments, or any combination thereof.

8. The method according to any one of claims 2 to 7,
wherein the at least one experiment is carried out by high-throughput screening.

9. The method according to any one of claims 1 to 8,
wherein the at least one correlation between parameters obtained in step (ii) is a correlation between the concentration of the target substance in the at least one feed solution and the viscosity of the at least one feed solution; between the temperature of the at least one feed solution and the viscosity of the at least one feed solution; between the pressure drop in a filtration channel of the at least one crossflow filtration device and the crossflow rate of the at least one crossflow filtration method; between the pressure drop in a filtration channel of the at least one crossflow filtration device and the viscosity of the at least one feed solution; between the transmembrane pressure in the at least one crossflow filtration method and the crossflow rate in the at least one crossflow filtration method; between the composition of the retentate and the viscosity of the retentate; between the composition of the retentate and the stability of the target substance in the retentate; between the crossflow rate and the stability of the target substance in the retentate, or any combination thereof.

10. The method according to any one of claims 1 to 9,
wherein step (iii) is carried out by employing a machine learning method and/or a deep learning method.

11. A crossflow filtration method comprising
the method of obtaining at least one crossflow filtration parameter according to any one of claims 1 to 10; and
(v) a step of carrying out the crossflow filtration employing the at least one parameter selected in step (iv).

12. System for obtaining at least one crossflow filtration parameter according to the method of any one of claims 2 to 10, the system comprising
(A) a crossflow filtration section configured for carrying out step (ii) involving at least one experiment;
(C) a modelling section configured for carrying out step (iii); and
(D) a selection section configured for carrying out step (iv).

13. The system according to claim 12, further comprising
(B) a database for carrying out step (ii).

14. The system according to claim 12 or 13,
wherein the modelling section (C) includes a computer, a program is stored on the computer and the program is configured to carry out step (iii).

15. The system according to claim 14,
wherein the database (B) is stored on the computer.
